# EUROPEAN PATENT APPLICATION

(11) **EP 4 523 784 A1**
(43) Date of publication of application: **19.03.2025**
(21) Application number: 24197677.8
(22) Date of filing: 30.08.2024
(51) Int. Cl.: B01F 35/92, B01F 35/93, B01F 35/90

(54) **MIXER**

(30) Priority: 06.09.2023 KR 20230118026
(71) Applicant: SK On Co., Ltd., Seoul 03161 (KR)
(72) Inventor: YANG, Ji Yun, 34124 Daejeon (KR)
(74) Representative: Stolmár & Partner Patentanwälte PartG mbB

(57) **Abstract**

A mixer includes: a mixing container (110) having an internal space and a flow path (111) through which a coolant flows; a heating member (120) installed in the mixing container; and a sensor (130) for sensing a temperature of at least one of a slurry contained in the mixing container and the coolant flowing along the flow path, wherein the heating member may heat at least one of the slurry and the coolant.

## Description

### TECHNICAL FIELD

The present disclosure relates to a mixer.

### BACKGROUND

Recently, an interest in energy storage technology has been increasing. As application fields expand to include energy storage for mobile phones, camcorders, laptop PCs, and even electric vehicles, efforts to research and develop electrochemical devices are becoming more concrete.

Electrochemical devices are a field receiving the most attention in this respect, and thereamong, the development of secondary batteries that can be charged and discharged is the focus of attention. Recently, in developing such batteries, research and development is being conducted on new electrode and battery designs to improve capacity density and energy efficiency.

Meanwhile, in order to prepare an electrode for a secondary battery, a slurry for a secondary battery is prepared by mixing a solute (e.g., an electrode active material, a binder, and the like) and a solvent.

As described above, a mixing container is generally used to prepare the slurry for a secondary battery. However, the slurry for a secondary battery provided from the mixing container should be provided at an appropriate temperature for each preparing process, and accordingly, a mixing container for controlling a temperature of the slurry for a secondary battery contained in the mixing container is required.

### SUMMARY

An aspect of the present disclosure is to provide a mixer for controlling a temperature of a slurry for a secondary battery contained in a mixing container.

According to an aspect of the present disclosure, a mixer includes: a mixing container having an internal space and a flow path through which a coolant flows; a heating member installed in the mixing container; and a sensor for sensing a temperature of at least one of a slurry contained in the mixing container and the coolant flowing along the flow path, wherein the heating member may heat at least one of the slurry and the coolant.

The mixing container may be provided with an inlet connected to the flow path and an outlet through which the coolant flowing along the flow path is discharged.

The heating member may be disposed to be buried in a side wall of the mixing container.

The heating member may have a bar shape, wherein the heating member is provided in plural, and the plurality of heating members may be disposed to be spaced apart from each other.

The heating member may be formed of a coil installed on an inner surface of the mixing container.

The heating member may be disposed to form a plurality of rows in upper and lower directions of the mixing container.

The heating member may be disposed on an outer surface of the mixing container.

The heating member may have a sheet shape disposed to surround the outer surface of the mixing container.

An inlet pipe through which the coolant flows may be connected to the inlet, and an outlet pipe through which the coolant flowing through the flow path is discharged may be connected to the outlet, and a first valve for controlling the flow of the coolant may be installed in the inlet pipe and a second valve for controlling the flow of the coolant may be installed in the outlet pipe.

The mixer may further include a control unit connected to the sensor, the heating member, the first valve, and the second valve to control the operations of the heating member, the first valve, and the second valve.

The control unit may control the heating member, the first valve, and the second valve according to the temperature of the slurry or the temperature of the coolant, sensed by the sensor.

The flow path may be disposed at least on a side wall of the mixing container.

The plurality of sensors may be disposed to be spaced apart from each other.

The sensor may include a first sensor disposed in an upper end portion of the inner surface of the mixing container, a second sensor disposed in a lower end portion of the mixing container, and a third sensor installed in the flow path to sense the temperature of the coolant.

The second sensor may be disposed in an outlet provided in a bottom portion of the mixing container or around the outlet.

The heating member may have a spiral shape.

According to an aspect of the present disclosure, a mixer may include: a mixing container having an internal space and a flow path through which a coolant flows; a heating member installed in the mixing container; and a sensor for sensing a temperature of at least one of a slurry contained in the mixing container and the coolant flowing along the flow path, wherein the mixing container is provided with an inlet connected to the flow path and an outlet through which the coolant flowing along the flow path is discharged, an inlet pipe through which the coolant flows is connected to the inlet, and an outlet pipe through which the coolant flowing through the flow path is discharged is connected to the outlet, and a first valve for controlling the flow of the coolant is installed in the inlet pipe, and a second valve for controlling the flow of the coolant is installed in the outlet pipe, the mixer, further comprising: a control unit connected to the sensor, the heating member, the first valve, and the second valve.

The control unit may control the operations of the heating member, the first valve, and the second valve according to the temperatures of the slurry and the coolant.

### BRIEF DESCRIPTION OF DRAWINGS

Certain aspects, features, and advantages of the present disclosure are illustrated by the following detailed description with reference to the accompanying drawings.
FIG. 1 is a perspective view illustrating a mixer according to an embodiment of the present disclosure.
FIG. 2 is a cross-sectional configuration diagram taken along line I-I' of FIG. 1.
FIG. 3 is a plan view illustrating a mixer according to an embodiment of the present disclosure.
FIG. 4 is a perspective view illustrating a mixer according to an embodiment of the present disclosure.
FIG. 5 is a cross-sectional configuration diagram taken along line I-I' of FIG. 4.
FIG. 6 is a plan view illustrating a mixer according to an embodiment of the present disclosure.
FIG. 7 is a perspective view illustrating a mixer according to an embodiment of the present disclosure.
FIG. 8 is a cross-sectional configuration diagram taken along line I-I' of FIG. 7.
FIG. 9 is a plan view illustrating a mixer according to an embodiment of the present disclosure.
FIG. 10 is a perspective view illustrating a mixer according to an embodiment of the present disclosure.
FIG. 11 is a cross-sectional configuration diagram taken along line I-I' of FIG. 10.
FIG. 12 is a plan view illustrating a mixer according to an embodiment of the present disclosure.

### DETAILED DESCRIPTION

Prior to the detailed description of the disclosed technology, the terms or words used in this patent document and claims described below should not be construed as being limited to common or dictionary meanings.

In the following description, singular expressions include plural expressions unless the context clearly dictates otherwise, and the same reference numerals throughout the specification refer to the same elements or corresponding elements.

In addition, in the following description, expressions such as upper side, upper portion, lower side, lower portion, side surface, front, rear, etc. are expressed based on the direction illustrated in the drawings, and may be expressed differently if the direction of the object is changed.

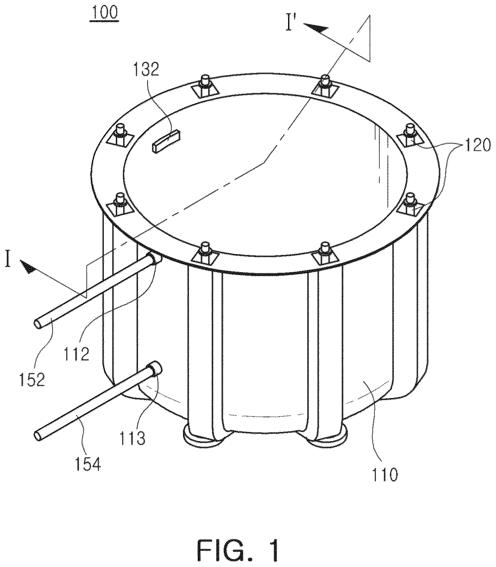

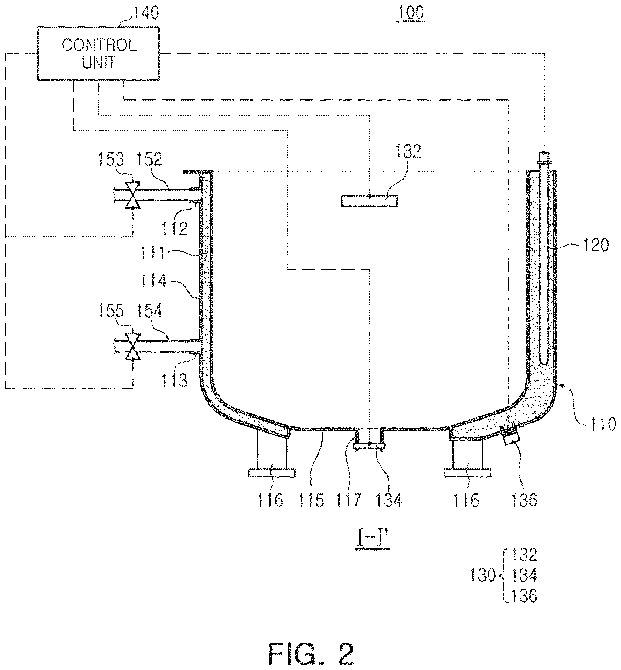

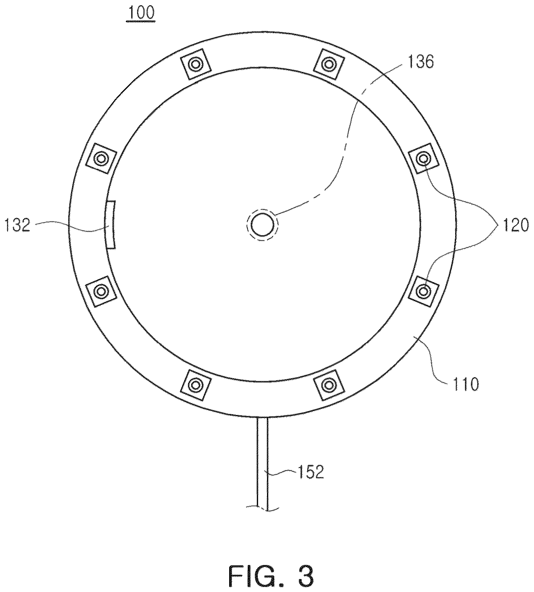

FIG. 1 is a perspective view illustrating a mixer according to an embodiment of the present disclosure, FIG. 2 is a cross-sectional configuration diagram taken along line I-I' of FIG. 1, and FIG. 3 is a plan view illustrating a mixer according to an embodiment of the present disclosure.

Referring to FIGS. 1 to 3, a mixer 100 according to an embodiment of the present disclosure may include a mixing container 110, a heating member 120, a sensor 130, and a control unit 140.

The mixing container 110 has an internal space for mixing a slurry for a secondary battery. As an example, the mixing container 110 may have a shape with an open upper portion, and a solute (e.g., an electrode active material, a binder, and the like) and a solvent for preparing the slurry for a secondary battery may flow into the mixing container 110 through the upper portion of the mixing container 110. In addition, the mixing container 110 may have a substantially cylindrical shape with a bottom portion 115, convex downwardly. Meanwhile, the mixing container 110 may be provided with a flow path 111 through which coolant flows to control a temperature of the slurry for a secondary battery. For example, the mixing container 110 may be provided with an inlet 112 connected to the flow path 111 and an outlet 113 through which the coolant flowing along the flow path 111 is discharged. As an example, the flow path 111 may be provided on a side wall 114 of the mixing container 110. However, the present disclosure is not limited thereto, and the flow path 111 is not limited thereto and may also be provided in the bottom portion 115 of the mixing container 110. An inlet pipe 152 through which the coolant flows may be connected to the inlet 112, and an outlet pipe 154 through which the coolant flowing through the flow path 111 is discharged may be connected to the outlet 113. A first valve 153 for controlling the flow of the coolant may be installed in the inlet 152, and a second valve 155 for controlling the flow of the coolant may be installed in the outlet 154. Meanwhile, the first valve 153 and the second valve 155 may be connected to the control unit 140 and may be opened and closed by the control unit 140. The mixing container 110 may be provided with a rotating member (not shown) to mix the solute and solvent to prepare a slurry. In addition, the bottom portion 115 of the mixing container 110 may be provided with a support 116 formed to extend downwardly so that the mixing container 110 can be stably stood on the floor.

Meanwhile, the bottom portion 115 of the mixing container 110 may be provided with an outlet 117 through which the mixed slurry for a secondary battery is discharged.

The heating member 120 is installed in the mixing container 110. As an example, the heating member 120 may be disposed to be buried in a side wall 114 of the mixing container 110. The heating member 120 is provided in plural. The heating member 120 may be disposed to be spaced apart from each other in a circumferential direction on the side wall 114 of the mixing container 110. Here, the circumferential direction refers to a direction rotating along an outer peripheral surface of the mixing container 110. Meanwhile, in the drawing, an example in which eight heating members 120 are provided, is illustrated as an example, but the number of heating members 120 is not limited thereto and may be changed in various ways.

As an example, the heating member 120 may have a bar shape with a square cross-section. However, the present disclosure is not limited thereto, and the shape of the heating member 120 may be changed in various ways, such as a circular cross-section, an elliptical shape, or a polygonal shape other than a square.

The sensor 130 may be installed in the mixing container 110 to sense a temperature of the slurry contained in the mixing container 110. As an example, the sensor 130 may include a first sensor 132 for sensing temperatures of a solute (e.g., an electrode active material, a binder, and the like) and a solvent, flowing into the mixing container 110, a second sensor 134 for sensing a temperature of the mixed slurry for a secondary battery, and a third sensor 436 for sensing a temperature of the coolant flowing along the flow path 111. As an example, the first sensor 132 may be installed on an inner surface of the side wall 114 of the mixing container 110, and the second sensor 134 may be installed in a bottom portion 115 of the mixing container 110, for example, may be installed at the outlet 117 or installed to be adjacent to the outlet 117. Accordingly, it is possible to not only sense the temperature of the solute (e.g., the electrode active material, the binder, and the like) and the solvent, flowing into the mixing container 110, but also sense the temperature of the mixed slurry for a secondary battery. Furthermore, the temperature of the coolant heated by the heating member 120 may be sensed by the third sensor 136. The third sensor 136 may serve to stop heating by the heating member 420 at a certain temperature level without continuously performing heating by the heating member 120.

Meanwhile, the sensor 130 may be connected to a control unit 140, to be described later, and transmit information on the temperatures of the solute (e.g., the electrode active material, the binder, and the like) and the solvent, wherein the temperatures thereof are sensed by the sensor 130, and the solute and the solvent flow into the mixing container 110, information on the temperature of the mixed slurry for a secondary battery, and information on the temperature of the coolant, to the control unit 140.

The control unit 140 may be connected to the heating member 120, the sensor 130, the first valve 153, and the second valve 155, to control the operations of the heating member 120 and the first valve 153, and the second valve 155 according to the signal transmitted from the sensor 130. As an example, when the temperatures of the solute (e.g., the electrode active material, the binder, and the like) and the solvent, sensed by the first sensor 432, the solute and the solvent flowing into the mixing container 110, do not reach an appropriate temperature (e.g., a level of about 50°C), the control unit 140 closes the first valve 153 to prevent the coolant from flowing into the flow path 111 and close the second valve 155 to prevent the coolant from being discharged from the flow path 111 to drive the heating member 120. Accordingly, the coolant contained in the flow path 111 is heated. Therefore, heat may be transferred to the slurry for a secondary battery flowing into the mixing container 110 by the heated coolant and the temperature of the slurry for a secondary battery may be heated to the appropriate temperature (e.g., a level of about 50°C). In this case, the heat generated from the heating member 120 may be directly transferred to the mixing container 110, and the heat transferred to the mixing container 110 may be transferred to the slurry for a secondary battery. Thereafter, when the temperature of the slurry for a secondary battery reaches an appropriate temperature, the control unit 140 stops an operation of the heating member 120.

Meanwhile, when the coolant is heated by the heating member 120 and the temperature of the coolant sensed by the third sensor 136 exceeds a certain temperature, the control unit 140 stops the operation of the heating member 120. Accordingly, overheating of the coolant by the heating member 120 can be prevented.

When the slurry for a secondary battery is required to be rapidly cooled, the control unit 140 opens the first and second valves 153 and 155 to allow a low-temperature coolant to flow into the flow path 111. When the slurry for a secondary battery is cooled so that the temperature of the coolant sensed by the third sensor 136 is a predetermined temperature, the control unit 140 closes the first and second valves 153 and 155 to end cooling and changes to a storage mode.

As described above, when the slurry for a secondary battery needs to be heated, the slurry may be heated through the heating member 120, and when the slurry for a secondary battery needs to be cooled, cooling can be performed by allowing low-temperature coolant to flow into the flow path 111.

Accordingly, a mixer 100 that can quickly switch the mixing container 110 between high and low temperatures.

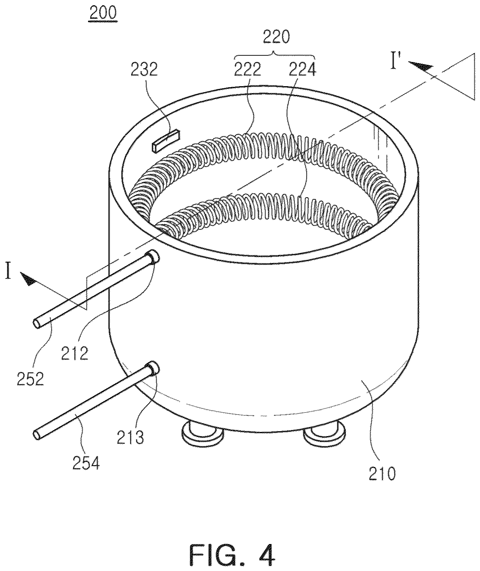

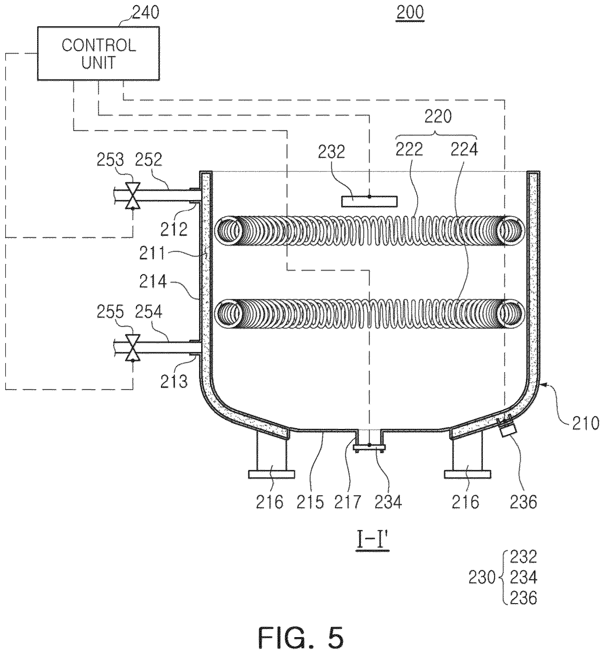

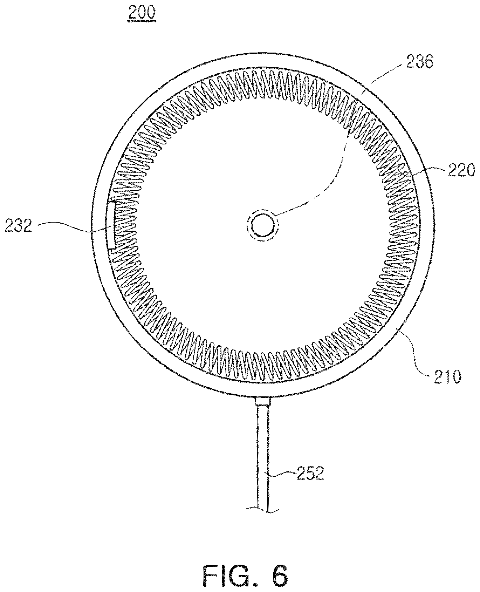

FIG. 4 is a perspective view illustrating a mixer according to an embodiment of the present disclosure, FIG. 5 is a cross-sectional configuration diagram taken along line I-I' of FIG. 4, and FIG. 6 is a plan view illustrating a mixer according to an embodiment of the present disclosure.

Referring to FIGS. 4 to 6, a mixer 200 according to an embodiment of the present disclosure may include a mixing container 210, a heating member 220, a sensor 230, and a control unit 240.

The mixing container 210 has an internal space for mixing a slurry for a secondary battery. As an example, the mixing container 210 may have a shape with an open upper portion, and a solute (e.g., an electrode active material, a binder, and the like) and a solvent for preparing the slurry for a secondary battery may flow into the mixing container 210 through the upper portion of the mixing container 210. In addition, the mixing container 210 may have a substantially cylindrical shape with a bottom portion 215, convex downwardly. Meanwhile, the mixing container 210 may be provided with a flow path 211 through which coolant flows to control a temperature of the slurry for a secondary battery. For example, the mixing container 210 may be provided with an inlet 212 connected to the flow path 211 and an outlet 213 through which the coolant flowing along the flow path 211 is discharged. As an example, the flow path 211 may be provided on a side wall 214 of the mixing container 210. However, the present disclosure is not limited thereto, and the flow path 211 is not limited thereto and may also be provided in the bottom portion 215 of the mixing container 210. An inlet pipe 252 through which the coolant flows may be connected to the inlet 212, and an outlet pipe 254 through which the coolant flowing through the flow path 211 is discharged may be connected to the outlet 213. A first valve 253 for controlling the flow of the coolant may be installed in the inlet pipe 252, and a second valve 255 for controlling the flow of the coolant may be installed in the outlet 254. Meanwhile, the first valve 253 and the second valve 255 may be connected to the control unit 240 and may be opened and closed by the control unit 240. The mixing container 210 may be provided with a rotating member (not shown) to mix the solute and solvent to prepare a slurry. In addition, the bottom portion 215 of the mixing container 210 may be provided with a support 216 formed to extend downwardly so that the mixing container 210 can be stably stood on the floor.

Meanwhile, the bottom portion 215 of the mixing container 210 may be provided with an outlet 217 through which the mixed slurry for a secondary battery is discharged.

The heating member 220 is installed in the mixing container 210. As an example, the heating member 220 may be disposed on an inner surface of the side wall 214 of the mixing container 210. The heating member 220 is provided in plural. The plurality of heating members 220 may be disposed on the side wall 214 of the mixing container 210 in a vertical direction to be spaced apart from each other. As an example, the heating member 220 may include a first heating member 222 disposed in an upper end portion of the stirring container 210, and a second heating member 224 disposed to be spaced apart from the first heating member 222 toward a lower side thereof. As an example, the heating member 220 may be configured as a heater having a coil shape. Meanwhile, in the drawing, an example in which the heating member 220 may comprise the first and second heating members 222 and 224, is illustrated as an example, but the present disclosure is not limited thereto, the heating member 220 may be disposed to form one row or three or more rows. Meanwhile, the heating member 220 may directly heat the slurry for a secondary battery contained in the mixing container 210 to control a temperature of the slurry.

The sensor 230 may be installed in the mixing container 210 to sense the temperature of the slurry contained in the mixing container 210. As an example, the sensor 230 may include a first sensor 232 for sensing temperatures of a solute (e.g., an electrode active material, a binder, and the like) and a solvent, flowing into the mixing container 210, a second sensor 234 for sensing a temperature of the mixed slurry for a secondary battery, and a third sensor 236 for sensing a temperature of the coolant flowing along the flow path 211. As an example, the first sensor 232 may be installed on the inner surface of the side wall 214 of the mixing container 210, and the second sensor 234 may be installed in a bottom portion 215 of the mixing container 210, for example, may be installed to be adjacent to the outlet 217. Accordingly, it is possible to not only sense the temperatures of the solute (e.g., the electrode active material, the binder, and the like) and the solvent, flowing into the mixing container 210, but also sense the temperature of the mixed slurry for a secondary battery. Furthermore, the temperature of the coolant heated by the heating member 220 may be sensed through the third sensor 236. The third sensor 236 may serve to stop heating by the heating member 220 at a certain temperature level without continuously performing heating by the heating member 220.

Meanwhile, the sensor 230 may be connected to a control unit 240, to be described later, and transmit information on the temperatures of the solute (e.g., the electrode active material, the binder, and the like) and the solvent, wherein the temperatures thereof are sensed by the sensor 230, and the solute and the solvent flow into the mixing container 210, information on the temperature of the mixed slurry for a secondary battery, and information on the temperature of the coolant, to the control unit 240.

The control unit 240 may be connected to the heating member 220, the sensor 230, the first valve 253, and the second valve 255, to control the operations of the heating member 220, the first valve 253, and the second valve 255 according to the signal transmitted from the sensor 230. As an example, when the temperatures of the solute (e.g., the electrode active material, the binder, and the like) and the solvent, flowing into the mixing container 210, sensed by the first sensor 232 do not reach an appropriate temperature (e.g., a level of about 50°C), the control unit 240 closes the first valve 253 to prevent coolant from flowing into the flow path 211 and close the second valve 255 to prevent the coolant from being discharged from the flow path 211 to drive the heating member 220.

Accordingly, the slurry for a secondary battery may be directly heated by the heating member 220 without being cooled by the coolant. Thereafter, when the temperature of the slurry for a secondary battery reaches an appropriate temperature, the control unit 240 stops the operation of the heating member 220.

Meanwhile, when the coolant is heated by the heating member 220 and the temperature of the coolant sensed by the third sensor 236 exceeds a certain temperature, the control unit 240 stops the operation of the heating member 220. Accordingly, overheating of the coolant by the heating member 220 can be prevented.

When the slurry for a secondary battery is required to be rapidly cooled, the control unit 240 opens the first and second valves 253 and 255 to allow a low-temperature coolant to flow into the flow path 211. When the slurry for a secondary battery is cooled so that the temperature of the coolant sensed by the third sensor 236 is cooled to a predetermined temperature, the control unit 240 closes the first and second valves 253 and 255 to end cooling and changes to a storage mode.

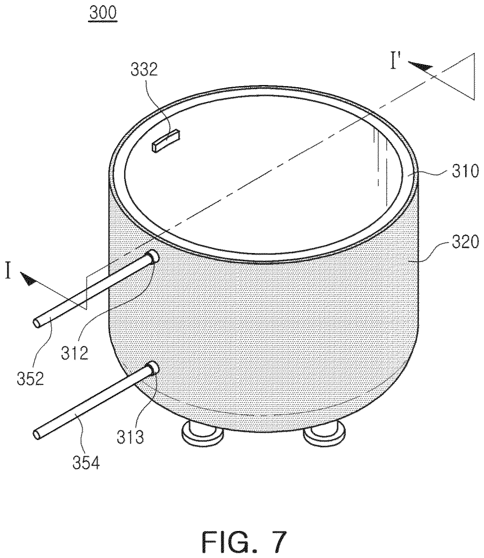

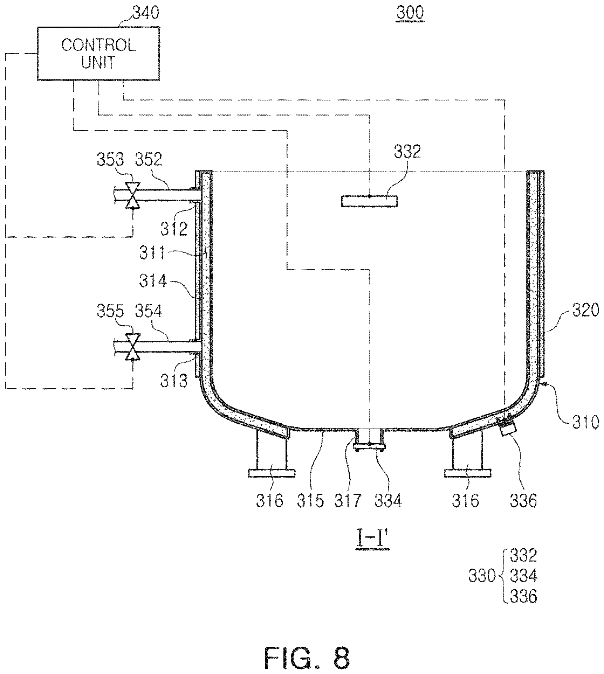

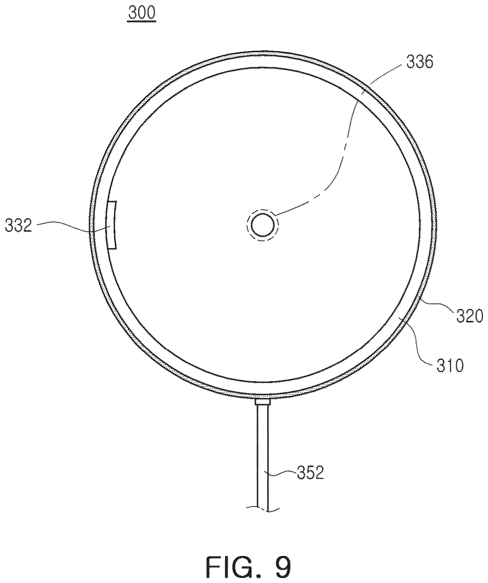

FIG. 7 is a perspective view illustrating a mixer according to an embodiment of the present disclosure, FIG. 8 is a cross-sectional configuration diagram taken along line I-I' of FIG. 7, and FIG. 9 is a plan view illustrating a mixer according to an embodiment of the present disclosure.

Referring to FIGS. 7 to 9, a mixer 300 according to an embodiment of the present disclosure may include a mixing container 310, a heating member 320, a sensor 330, and a control unit 340.

The mixing container 310 has an internal space for mixing a slurry for a secondary battery. As an example, the mixing container 310 may have a shape with an open upper portion, and a solute (e.g., an electrode active material, a binder, and the like) and a solvent for preparing the slurry for the secondary battery may flow into the mixing container 310 through the upper portion of the mixing container 310.

Meanwhile, the bottom portion 315 of the mixing container 310 may be provided with an outlet 317 through which the mixed slurry for a secondary battery is discharged.

The heating member 320 is installed in the mixing container 310. As an example, the heating member 320 may be disposed on an outer surface of the side wall 314 of the mixing container 310. As an example, the heating member 320 may have a sheet shape disposed to surround the outer surface of the mixing container 310. Meanwhile, in the drawing, an example in which the heating member 320 is comprised of a single sheet is illustrated as an example, but the present disclosure is not limited thereto, and the heating member 320 may be divided into a plurality of sheets.

The sensor 330 may be installed in the mixing container 310 to sense a temperature of the slurry contained in the mixing container 310. As an example, the sensor 330 may include a first sensor 332 for sensing temperatures of a solute (e.g., an electrode active material, a binder, and the like) and a solvent, flowing into the mixing container 310, a second sensor 334 for sensing a temperature of the mixed slurry for a secondary battery, and a third sensor 336 for sensing a temperature of the coolant flowing along the flow path 311. As an example, the first sensor 332 may be installed on the inner surface of the side wall 314 of the mixing container 310, and the second sensor 334 may be installed in a bottom portion 315 of the mixing container 310, for example, may be installed to be adjacent to the outlet 317. Accordingly, it is possible to not only sense the temperatures of the solute (e.g., the electrode active material, the binder, and the like) and the solvent, flowing into the mixing container 310, but also sense the temperature of the mixed slurry for a secondary battery. Furthermore, the temperature of the coolant heated by the heating member 320 may be sensed through the third sensor 336. The third sensor 336 may serve to stop heating by the heating member 320 at a certain temperature level without continuously performing heating by the heating member 320.

Meanwhile, the sensor 330 may be connected to a control unit 340, to be described later, and transmit information on the temperatures of the solute (e.g., the electrode active material, the binder, and the like) and the solvent, wherein the temperatures thereof are sensed by the sensor 330, and the solute and the solvent flow into the mixing container 310, information on the temperature of the mixed slurry for a secondary battery, and information on the temperature of the coolant, to the control unit 340.

The control unit 340 may be connected to the heating member 320, the sensor 330, the first valve 353, and the second valve 355, to control the operations of the heating member 320, the first valve 353, and the second valve 355 according to the signal transmitted from the sensor 330. As an example, when the temperatures of the solute (e.g., the electrode active material, the binder, and the like) and the solvent, flowing into the mixing container 310, sensed by the first sensor 332 do not reach an appropriate temperature (e.g., a level of about 50°C), the control unit 340 closes the first valve 353 to prevent coolant from flowing into the flow path 311 and close the second valve 355 to prevent the coolant from being discharged from the flow path 311 to drive the heating member 320. Accordingly, the slurry for a secondary battery may be directly heated by the heating member 320 without being cooled by the coolant. Thereafter, when the temperature of the slurry for a secondary battery reaches an appropriate temperature, the control unit 340 stops the operation of the heating member 320.

Meanwhile, when the coolant is heated by the heating member 320 and the temperature of the coolant sensed by the third sensor 336 exceeds a certain temperature, the control unit 340 stops the operation of the heating member 320. Accordingly, overheating of the coolant by the heating member 320 can be prevented.

When the slurry for a secondary battery is required to be rapidly cooled, the control unit 340 opens the first and second valves 353 and 355 to allow low-temperature coolant to flow into the flow path 311. When the slurry for a secondary battery is cooled so that the temperature of the coolant sensed by the third sensor 336 is a predetermined temperature, the control unit 340 closes the first and second valves 353 and 355 to end cooling and changes to a storage mode.

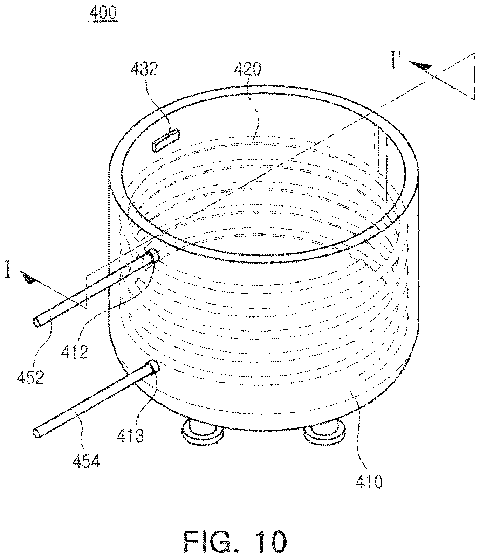

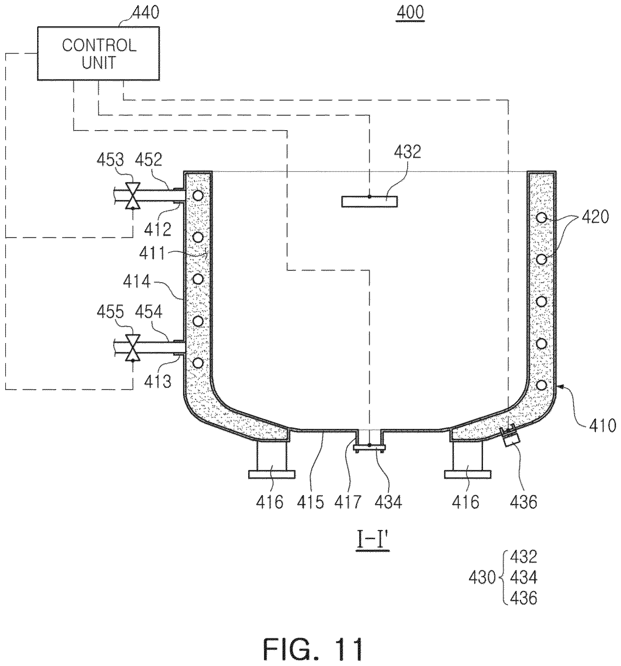

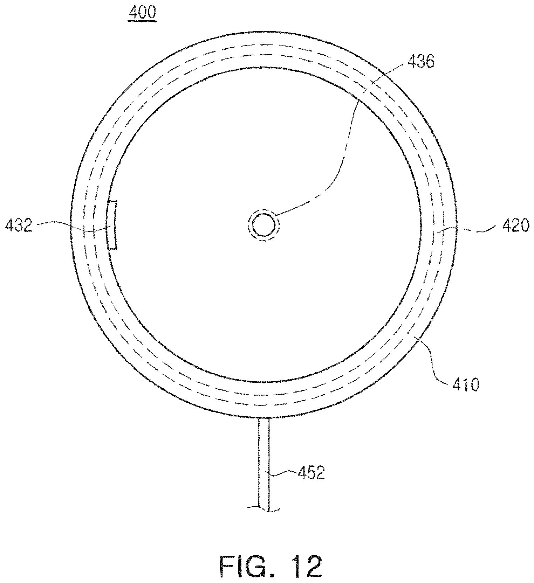

FIG. 10 is a perspective view illustrating a mixer according to an embodiment of the present disclosure, FIG. 11 is a cross-sectional configuration diagram taken along line I-I' of FIG. 10, and FIG. 12 is a plan view illustrating a mixer according to an embodiment of the present disclosure.

Referring to FIGS. 10 to 12, a mixer 400 according to an embodiment of the present disclosure may include a mixing container 410, a heating member 420, a sensor 430, and a control unit 440.

The mixing container 410 has an internal space for mixing a slurry for a secondary battery. As an example, the mixing container 410 may have a shape with an open upper portion, and a solute (e.g., an electrode active material, a binder, and the like) and a solvent for preparing a slurry for a secondary battery may flow into the mixing container 410 through the upper portion of the mixing container 410. In addition, the mixing container 410 may have a substantially cylindrical shape with a bottom portion 415, convex downwardly. Meanwhile, the mixing container 410 may be provided with a flow path 411 through which coolant flows to control a temperature of the slurry for a secondary battery. For example, the mixing container 410 may be provided with an inlet 412 connected to the flow path 411 and an outlet 413 through which the coolant flowing along the flow path 411 is discharged. As an example, the flow path 411 may be provided on a side wall 414 of the mixing container 410. However, the present disclosure is not limited thereto, and the flow path 411 is not limited thereto and may also be provided in the bottom portion 415 of the mixing container 410. In addition, an inlet pipe 452 through which coolant flows may be connected to the inlet 412, and an outlet pipe 454 through which the coolant flowing through the flow path 411 may be discharged may be connected to the outlet 413. A first valve 453 for controlling the flow of the coolant may be installed in the inlet 452, and a second valve 455 for controlling the flow of the coolant may be installed in the outlet 454. Meanwhile, the first valve 453 and the second valve 455 may be connected to the control unit 440 and may be opened and closed by the control unit 440. The mixing container 410 may be provided with a rotating member (not shown) to mix the solute and solvent to prepare a slurry. In addition, the bottom portion 415 of the mixing container 410 may be provided with a support 416 formed to extend downwardly so that the mixing container 410 can be stably stood on the floor.

Meanwhile, the bottom portion 415 of the mixing container 410 may be provided with an outlet 417 through which the mixed slurry for a secondary battery is discharged.

The heating member 420 is installed in the mixing container 410. As an example, the heating member 420 may be disposed to be buried in a side wall 414 of the mixing container 410. The heating member 420 may have a spiral shape. Meanwhile, in the drawing, an example in which the heating member 420 has a circular spiral shape is illustrated as an example, but the present disclosure is not limited thereto, and the heating member 420 may have a spiral shape corresponding to the shape of the mixing container 410. For example, when the mixing container 410 has a box shape, the heating member 420 may have a square spiral shape. In addition, when the mixing container 410 has an oval shape when viewed from above, the heating member 420 may have an oval spiral shape.

The sensor 430 may be installed in the mixing container 410 to sense a temperature of the slurry contained in the mixing container 410. As an example, the sensor 430 may include a first sensor 432 for sensing temperatures of a solute (e.g., an electrode active material, a binder, and the like) and a solvent, flowing into the mixing container 410, a second sensor 434 for sensing a temperature of the mixed slurry for a secondary battery, and a third sensor 436 for sensing the temperature of the coolant flowing along the flow path 411. As an example, the first sensor 432 may be installed on an inner surface of the side wall 414 of the mixing container 410, and the second sensor 434 may be installed in a bottom portion 415 of the mixing container 410, for example, may be installed to be adjacent to the outlet 417. Accordingly, it is possible to not only sense the temperatures of the solute (e.g., the electrode active material, the binder, and the like) and the solvent, flowing into the mixing container 410, but also sense the temperature of the mixed slurry for a secondary battery. Furthermore, the temperature of the coolant heated by the heating member 420 can be sensed through the third sensor 436. The third sensor 436 may serve to stop heating by the heating member 420 at a certain temperature level without continuously performing heating by the heating member 420.

Meanwhile, the sensor 430 may be connected to a control unit 440, to be described later, and transmit information on the temperatures of the solute (e.g., the electrode active material, the binder, and the like) and the solvent, wherein the temperatures thereof are sensed by the sensor 430, and the solute and the solvent flow into the mixing container 410, information on the temperature of the mixed slurry for a secondary battery, and information on the temperature of the coolant, to the control unit 440.

The control unit 440 may be connected to the heating member 420, the sensor 430, the first valve 453, and the second valve 455, and control the operations of the heating member 420 and the first valve 455, and the second valve 455 according to the signal transmitted from the sensor 430. As an example, when the temperatures of the solute (e.g., the electrode active material, the binder, and the like) and the solvent, flowing into the mixing container 410, sensed by the first sensor 432 do not reach the appropriate temperature (e.g., about 50°C), the control unit 440 may close the first valve 453 to prevent coolant from flowing into the flow path 411 and close the second valve 455 to prevent the coolant from being discharged from the flow path 411 to drive the heating member 420. Accordingly, the slurry for a secondary battery can be heated by the heating member 420 without cooling by the coolant. Thereafter, when the temperature of the slurry for a secondary battery reaches an appropriate temperature, the control unit 440 stops the operation of the heating member 420.

Meanwhile, when the coolant is heated by the heating member 420 and the temperature of the coolant sensed by the third sensor 436 exceeds a certain temperature, the control unit 440 stops the operation of the heating member 420. Accordingly, overheating of the coolant by the heating member 420 can be prevented.

When the slurry for a secondary battery is required to be rapidly cooled, the control unit 440 opens the first and second valves 453 and 455 to allow low-temperature coolant to flow into the flow path 411. When the slurry for a secondary battery is cooled so that the temperature of the coolant sensed by the third sensor 436 is a predetermined temperature, the control unit 440 closes the first and second valves 453 and 455 to end cooling and changes to a storage mode.

As set forth above, according to an embodiment of the present disclosure, a mixer for controlling a temperature of a slurry for a secondary battery may be provided.

Only specific examples of implementations of certain embodiments are described. Variations, improvements and enhancements of the disclosed embodiments and other embodiments may be made based on the disclosure of this patent document.

While exemplary embodiments have been illustrated and described above, it will be apparent to those skilled in the art that modifications and variations could be made without departing from the scope of the present invention as defined by the appended claims.

## Claims

1. A mixer, comprising:
a mixing container having an internal space and a flow path through which a coolant flows;
a heating member installed in the mixing container; and
a sensor for sensing a temperature of at least one of a slurry contained in the mixing container and the coolant flowing along the flow path,
wherein the heating member heats at least one of the slurry and the coolant.

2. The mixer of claim 1, wherein the mixing container is provided with an inlet connected to the flow path and an outlet through which the coolant flowing along the flow path is discharged.

3. The mixer of claim 1 or 2, wherein the heating member is disposed to be buried in a side wall of the mixing container.

4. The mixer of claim 3, wherein the heating member has a bar shape, wherein the heating member is provided in plural, and the plurality of heating members are disposed to be spaced apart from each other.

5. The mixer of claim 1 or 2, wherein the heating member is formed of a coil installed in the internal space of the mixing container.

6. The mixer of claim 5, wherein the heating member is disposed to form a plurality of rows in upper and lower directions of the mixing container.

7. The mixer of claim 1 or 2, wherein the heating member is disposed on an outer surface of the mixing container.

8. The mixer of any one of claims 2 to 7, wherein
an inlet pipe through which the coolant flows is connected to the inlet, and an outlet pipe through which the coolant flowing through the flow path is discharged is connected to the outlet, and
a first valve for controlling the flow of the coolant is installed in the inlet pipe, and a second valve for controlling the flow of the coolant is installed in the outlet pipe.

9. The mixer of claim 8, further comprising:
a control unit connected to the sensor, the heating member, the first valve, and the second valve, to control the operations of the heating member, the first valve, and the second valve.

10. The mixer of claim 9, wherein the control unit controls the heating member, the first valve, and the second valve, according to a temperature of the slurry or a temperature of the coolant sensed by the sensor.

11. The mixer of any one of preceding claims, wherein the flow path is disposed at least on a side wall of the mixing container.

12. The mixer of any one of preceding claims, wherein the plurality of sensors are disposed to be spaced apart from each other.

13. The mixer of claim 12, wherein the sensor comprises a first sensor disposed in an upper end portion of the inner surface of the mixing container, a second sensor disposed in a lower end portion of the mixing container, and a third sensor installed in the flow path to sense the temperature of the coolant.

14. The mixer of claim 13, wherein the second sensor is disposed in an outlet provided in a bottom portion of the mixing container or around the outlet.

15. The mixer of claim 3, wherein the heating member has a spiral shape.
